# EUROPÄISCHE PATENTANMELDUNG

(11) **EP 1 213 506 A2**
(43) Veröffentlichungstag der Anmeldung: **12.06.2002**
(21) Anmeldenummer: 01120546.5
(22) Anmeldetag: 29.08.2001
(51) Int. Cl.: F16H 3/00

(54) **Getriebe, insbesondere für ein Kraftfahrzeug**

(30) Priorität: 06.12.2000 DE 10060862
(71) Anmelder: Spicer Off-Highway Belgium N.V., B-8200 Brugge (BE)
(72) Erfinder: Pecceu, Rik, 8820 Oostnieuwkerke (BE); de Maziere, Filip, 9070 Heusden (BE)
(74) Vertreter: Patentanwälte Rehberg + Hüppe

(57) **Zusammenfassung**

Ein Getriebe (1), insbesondere für ein Kraftfahrzeug, weist eine Eingangswelle (2), eine Ausgangswelle (3) und eine Zwischenwelle (4) auf, wobei die drei Wellen (2 bis 4) in festen Abständen parallel zueinander ausgerichtet sind und wobei Zahnräder (8 bis 12 und 28 bis 33) auf den drei Wellen (2 bis 4) gelagert sind, die paarweise ineinander eingreifen und mindestens einem Vorwärtsgangs einerseits und einem Rückwärtsgang andererseits zugeordnet sind, wobei die Ausgangswelle (3) in dem Rückwärtsgang bei fester Drehrichtung der Eingangswelle (2) die umgekehrte Drehrichtung aufweist wie in dem Vorwärtsgang. Die Eingangswelle (2), die Ausgangswelle (3) und die Zwischenwelle (4) sind so in den Ecken eines gedachten Dreiecks angeordnet, daß in mindestens einem der Gänge ein Zahnrad (11) auf der Eingangswelle (2), das mit dieser umläuft, direkt ein Zahnrad (12) auf der Ausgangswelle (3), das mit dieser umläuft, antreibt, und in mindestens einem anderen der Gänge ein Zahnrad (8) auf der Eingangswelle (2), das mit dieser umläuft, ein Zahnrad (9) auf der Zwischenwelle (4) antreibt, das dann ein Zahnrad (10) auf der Ausgangswelle (3) antreibt, das mit dieser umläuft.

## Beschreibung

Die Erfindung bezieht sich auf ein Getriebe, insbesondere für ein Kraftfahrzeug, mit einer Eingangswelle, mit einer Ausgangswelle und mit einer Zwischenwelle, wobei die drei Wellen in festen Abständen parallel zueinander ausgerichtet sind und wobei Zahnräder auf den drei Wellen gelagert sind, die paarweise ineinander eingreifen und in unterschiedlichen Kombinationen mindestens vier Vorwärtsgängen und vier Rückwärtsgängen zugeordnet sind, wobei die Ausgangswelle in den Rückwärtsgängen bei fester Drehrichtung der Eingangswelle die umgekehrte Drehrichtung aufweist wie in den Vorwärtsgängen.

Um bei einem Getriebe bei fester Drehrichtung der Eingangswelle umgekehrte Drehrichtungen der Ausgangswelle zu realisieren, müssen Zahnräder auf unterschiedlich vielen Wellen zwischen und einschließlich der Eingangswelle und der Ausgangswelle in Wirkeingriff miteinander gebracht werden. Ist die Anzahl der Wellen gerade, ergibt sich eine Drehrichtungsumkehr zwischen der Eingangswelle und der Ausgangswelle. Ist die Anzahl der Wellen ungerade, weisen die Eingangswelle und die Ausgangswelle dieselbe Drehrichtung auf. Zu beachten ist dabei, daß eine Welle, auf der mehrere Zahnräder oder Gruppen von Zahnrädern angeordnet sind, die bei dem jeweiligen Gang Drehmomente übertragen, auch mehrfach zu zählen ist.

Um bei einem bekannten Getriebe der eingangs beschriebenen Art auf die vorbeschriebene Weise eine Drehrichtungsumkehr zwischen den Vorwärtsgängen und den Rückwärtsgängen zu realisieren ist eine Umkehrwelle vorgesehen, auf der zwei drehfest miteinander verbundene Zahnräder angeordnet sind. Eines dieser Zahnräder steht in Eingriff mit dem Zahnrad auf der Eingangswelle und das andere in Eingriff mit einem Zahnrad auf der Zwischenwelle. Wenn der Drehmomentübertragungsweg über die Umkehrwelle angewählt wird, weisen die Eingangswelle und die Zwischenwelle dieselbe Drehrichtung auf. Bei einer alternativen direkten Drehmomentübertragung von der Eingangswelle auf die Zwischenwelle weisen diese beiden Wellen entgegengesetzte Drehrichtungen auf. So werden auch unterschiedliche Drehrichtungen der von der Zwischenwelle angetriebenen Ausgangswelle realisiert. Das bekannte Lager der eingangs beschriebenen Art weist darüberhinaus eine zweite Ausgangswelle auf, um beispielsweise bei einem Baustellenfahrzeug neben dem Permanentantrieb einer Achse einen zuschaltbaren Allradantrieb zu realisieren.

Eine Umkehrwelle, die im englischen auch als Idler Shaft bezeichnet wird, erhöht die Baugröße des Getriebes und die Anzahl der in ihm verbauten Zahnräder und Lager. Darüberhinaus begrenzt die Umkehrwelle bei gegebenen Maximalabmessungen des Getriebes die Größe der Zahnräder insbesondere auf der Eingangswelle und der Zwischenwelle, was bei Übertragung größerer Drehmomente nachteilig ist.

Der Erfindung liegt die Aufgabe zugrunde, ein verbessertes Getriebe der eingangs beschriebenen Art aufzuzeigen, das mit einer geringeren Anzahl von Zahnrädern und Lagern auskommt und trotzdem für hohe Drehmomente geeignet ist. Dabei soll dem besonderen Einbaubedingungen in sogenannten Back Hoe Loadern und Boom Handlern Rechnung getragen werden, die durch einen geringen achsialen Raum für das Getriebe gekennzeichnet sind, so daß es nicht möglich ist, mit größeren Zahnrädern zur Übertragung größerer Drehmomente in achsialer Richtung auszuweichen.

Erfindungsgemäß wird diese Aufgabe dadurch gelöst, daß die Eingangswelle, die Ausgangswelle und die Zwischenwelle so in den Ecken eines gedachten Dreiecks angeordnet sind, daß in mindestens einem der Gänge ein Zahnrad auf der Eingangswelle, das mit dieser umläuft, in ein Zahnrad auf der Ausgangswelle, das mit dieser umläuft, eingreift, und in mindestens einem der anderen der Gänge ein Zahnrad auf der Eingangswelle, das mit dieser umläuft, in ein Zahnrad auf der Zwischenwelle angreift, das seinerseits in ein Zahnrad auf der Ausgangswelle eingreift, das mit dieser umläuft.

In dieser Definition der Erfindung ist es von Bedeutung, daß sich die Begriffe Eingangswelle und Ausgangswelle tatsächlich auf die Eingangswelle und die Ausgangswelle des gesamten Getriebes beziehen, zwischen denen die mindestens vier Vorwärtsgänge und die mindestens vier Rückwärtsgänge ausgebildet sind. Dies bedeutet dann, daß durch die direkte Drehmomentübertragung zwischen der Eingangswelle und der Ausgangswelle einerseits und durch die Drehmomentübertragung von der Eingangswelle über die Zwischenwelle auf die Ausgangswelle zwei unterschiedliche Drehrichtungen ohne die Einschaltung einer zusätzlichen Umkehrwelle realisiert sind. Voraussetzung hierfür ist, daß die drei Wellen, d. h. die Eingangswelle, die Ausgangswelle und die Zwischenwelle eine geeignete geometrische Anordnung aufweisen, die diese zwei unterschiedlichen Drehmomentübertragungswege zuläßt. Durch die Vermeidung einer zusätzlichen Umkehrwelle können bei dem neuen Getriebe auf gegebenem Raum relativ große Zahnräder zum Einsatz kommen, die für die Übertragung relativ großer Drehmomente um die Wellen geeignet sind. Gleichzeitig ist die Anzahl der Lager durch den Wegfall der Umkehrwelle um mindestens zwei reduziert, und dies gilt auch für die Anzahl der Zahnräder, weil keine zusätzlichen Zahnräder für die Drehrichtungsumkehr verwendet werden. Vielmehr wird die Anzahl der Zahnräder auf das für die Realisation der gewünschten Abstufung der Vorwärtsgänge bzw. Rückwärtsgänge notwendige Maß reduziert.

Dabei ist es typischerweise so, daß der eine Gang, bei dem die Eingangswelle die Ausgangswelle direkt antreibt, und der andere Gang, bei dem die Zwischenwelle dazwischengeschaltet ist, vom Betrag her unterschiedliche Übersetzungen zwischen der Eingangswelle und der Ausgangswelle realisieren. Diese Übersetzungen sind aber von den Zahnzahlen der beteiligten Zahnräder abhängig und können auch gleich sein.

Dies gilt unabhängig davon, ob die Abstände der Wellen untereinander gleich sind oder nicht. Bevorzugt ist eine Ausführungsform des neuen Getriebes, bei der die Abstände der Wellen untereinander zwar ungefähr gleich sind, so daß der kleinste Abstand maximal 20 % kleiner ist als der größte Abstand, aber nicht alle Abstände identisch sind.

Um bei dem neuen Getriebe eine hinreichende Abstufung zwischen vier unterschiedlichen Vorwärts- bzw. Rückwärtsgängen zu erreichen, ist es sinnvoll, mehrere Zahnräder bzw. Gruppen von Zahnrädern auf einer der Wellen gleichzeitig in die Drehmomentübertragung einzubeziehen. Dabei kommen insbesondere mehrere Zahnräder bzw. Gruppen von Zahnrädern auf der Zwischenwelle und der Ausgangswelle in Betracht. Beispielsweise kann in mindestens einem weiteren der Gänge ein Zahnrad auf der Eingangswelle, das mit dieser umläuft, in ein Zahnrad auf der Ausgangswelle eingreifen, das seinerseits in ein Zahnrad auf der Zwischenwelle eingreift, wobei das Zahnrad auf der Zwischenwelle mit einem weiteren Zahnrad auf der Zwischenwelle drehfest verbunden ist, das in ein Zahnrad auf der Ausgangswelle eingreift, das mit dieser umläuft. Dabei laufen die beiden Zahnräder auf der Ausgangswelle in derselben Drehrichtung aber sinnvollerweise mit unterschiedlicher Drehgeschwindigkeit um, wobei natürlich nur eines der beiden Zahnräder mit der Ausgangswelle umlaufen kann und dazu drehfest mit dieser verbunden ist.

Um bei dem zuletzt angesprochenen Beispiel das Über- bzw. Untersetzungsverhältnis zu vergrößern, kann statt des direkten Eingriffs des ersten Zahnrads auf der Ausgangswelle in das Zahnrad auf der Zwischenwelle auch vorgesehen sein, daß das erste Zahnrad auf der Ausgangswelle mit einem weiteren Zahnrad auf der Ausgangswelle drehfest verbunden, ist, welches dann das erste Zahnrad auf der Zwischenwelle antreibt, wobei das erste Zahnrad und das weitere Zahnrad auf der Ausgangswelle unterschiedliche Zahnzahlen aufzeigen. Hierdurch wird allerdings die Gesamtanzahl der Zahnräder des Getriebes gegenüber der Minimalanzahl um eins erhöht.

In der derzeit bevorzugten Ausführungsform des neuen Getriebes sind zwei Schaltkupplungen zum Einlegen der Vorwärtsgänge einerseits und zum Einlegen der Rückwärtsgänge andererseits jeweils zwischen der Eingangswelle und einem darauf gelagerten Zahnrad vorgesehen. Dabei ist die Drehmomentübertragung für die Vorwärtsgänge immer unter Zwischenschaltung der Zwischenwelle und die Drehmomentübertragung zumindest für einen Rückwärtsgang direkt von der Eingangswelle auf die Ausgangswelle vorgesehen.

Weiterhin sind bei einer Variante der bevorzugten Ausführungsform des neuen Getriebes zwei Schaltkupplungen zum Einlegen zweier Gänge jeweils zwischen der Ausgangswelle und einem darauf gelagerten Zahnrad vorgesehen. zwei weitere Schaltkupplungen zum Einlegen zweier weiterer Gänge sind dann jeweils zwischen der Zwischenwelle und einem darauf gelagerten Zahnrad vorgesehen. Mithin sind jeder der drei Wellen zwei Schaltkupplungen zugeordnet, die über die jeweilige Welle problemlos ansteuerbar sind. Außerdem wird durch die gleichmäßige Verteilung der Schaltkupplungen auf alle drei Wellen eine kurze Baulänge des Getriebes in Achsrichtung ermöglicht. Statt der beiden Schaltkupplungen auf der Ausgangswelle und der Zwischenwelle können dort jeweils auch Doppelsynchronisierer zum Einlegen zweier aufeinanderfolgender Gänge vorgesehen sein.

Für die vier Vorwärtsgänge und die vier Rückwärtsgänge kommt das neue Getriebe mit insgesamt zehn Zahnrädern aus, die ausschließlich auf den drei Wellen angeordnet sind. Bei der schon oben angesprochenen Möglichkeit der Realisation stärkerer Unter- bzw. Übersetzungen erhöht sich die Gesamtanzahl der Zahnräder auf 11, was immer noch als ausgesprochen wenig für ein gattungsgemäßes Getriebe anzusehen ist.

Bei dem neuen Getriebe ist eine weitere Ausgangswelle nur dann vorgesehen, wenn durch das Getriebe auch noch irgendwelche Zusatzfunktionen bereitgestellt werden sollen. So kann eine weitere Ausgangswelle vorgesehen sein, um einen zuschaltbaren Allradantrieb zu realisieren. Hierzu ist auf der weiteren Ausgangswelle ein Zahnrad gelagert, wobei dieses Zahnrad in ein drehfest auf der anderen Ausgangswelle gelagertes und gleichzeitig mit mindestens einem Gang des Getriebes zwischen der Eingangswelle und der anderen Ausgangswelle zugeordnetes Zahnrad eingreift und über eine Kupplung mit der weiteren Ausgangswelle verbindbar ist. Die Allradfunktion des Getriebes wird dann durch ein einziges zusätzliches Zahnrad auf einer einzigen zusätzlichen Welle realisiert. Durch das Zahnrad auf der anderen Ausgangswelle und das mit diesem im Eingriff stehenden Zahnrad auf der weiteren Ausgangswelle können unterschiedliche Übersetzungsverhältnis zwischen den beiden Ausgangswellen eingestellt werden.

Grundsätzlich können bei dem neuen Getriebe die vier Vorwärtsgänge und die vier Rückwärtsgänge vom Betrag gleiche Übersetzungen zwischen der Eingangswelle und der Ausgangswelle aufweisen. Es kann aber auch sinnvoll sein, wenn die vier Rückwärtsgänge eine vom Betrag her um 15 bis 25 %, d. h. etwa 20 % schnellere Übersetzung zwischen der Eingangswelle und der Ausgangswelle aufweisen als die Vorwärtsgänge. Dies gilt insbesondere dann, wenn zusätzlich zu den vier Vorwärtsgängen des Getriebes Direkt- bzw. oder Overdrivevorwärtsgänge ausgebildet sind.

In der Regel ist der Eingangswelle bei dem neuen Getriebe ein Drehmomentwandler mit einer Wandlereingangswelle vorgeschaltet, die durch den Wandler von der Eingangswelle entkoppelt ist. Für die Ausbildung von Direkt- bzw. Overdrivegängen kann eine weitere Zwischenwelle vorgesehen sein, auf der ein Zahnrad, das in ein drehfest auf der Wandlereingangswelle angeordnetes Zahnrad eingreift, und ein weiteres Zahnrad angeordnet sind, das in ein Zahnrad auf der Ausgangswelle eingreift, wobei zwischen den beiden Zahnrädern auf der weiteren Zwischenwelle eine Kupplung vorgesehen ist. Mit dieser Kupplung wird dann auf die Direkt- bzw. Overdrivegänge umgeschaltet.

Wenn das Zahnrad auf der Ausgangswelle dabei fest mit der Ausgangswelle verbunden ist, ergibt sich nur ein zusätzlicher Gang. Es ist aber ohne weiteres möglich, auf diese Weise auch zwei oder vier zusätzliche Gänge für die Schnellfahrt auszubilden.

Bezüglich der geometrischen Form eines solchen Getriebes mit zusätzlichen Direkt- bzw. Overdrivegängen ist eine Anordnung bevorzugt, bei der die Eingangswelle oberhalb der Ausgangswelle vorgesehen ist, wobei auf halber Höhe einerseits die eine Zwischenwelle und andererseits die weitere Zwischenwelle vorgesehen sind. Eine zusätzliche Ausgangswelle kann dabei weiter unterhalb angeordnet werden.

Die Erfindung wird im folgenden anhand von Ausführungsbeispielen näher erläutert und beschrieben, dabei zeigt
- Fig. 1: schematisch die Anordnung der Eingangswelle, der Ausgangswelle und der Zwischenwelle bei dem neuen Getriebe sowie die Drehrichtung der Wellen bei einem eingelegten Gang,
- Fig. 2: dieselbe Anordnung der Wellen wie in Fig. 1 sowie die Drehrichtung der Eingangswelle und der Ausgangswelle bei einem anderen eingelegten Gang,
- Fig. 3: einen Schnitt durch eine erste Ausführungsform des neuen Getriebes, wobei die Wellen zur besseren zeichnerischen Darstellung in einer Ebene liegend wiedergegeben sind,
- Fig. 4: die Relativlage der Wellen bei dem Getriebe gemäß Fig. 3,
- Fig. 5: einen Schnitt durch eine zweite Ausführungsform des neuen Getriebes, wobei die Wellen wieder in einer Ebene liegend dargestellt sind,
- Fig. 6: einen Schnitt durch eine weitere Ausführungsform des neuen Getriebes, wobei die Wellen wieder in einer Ebene liegend dargestellt sind, und
- Fig. 7: die Relativlage der Wellen bei dem Getriebe gemäß Fig. 6.

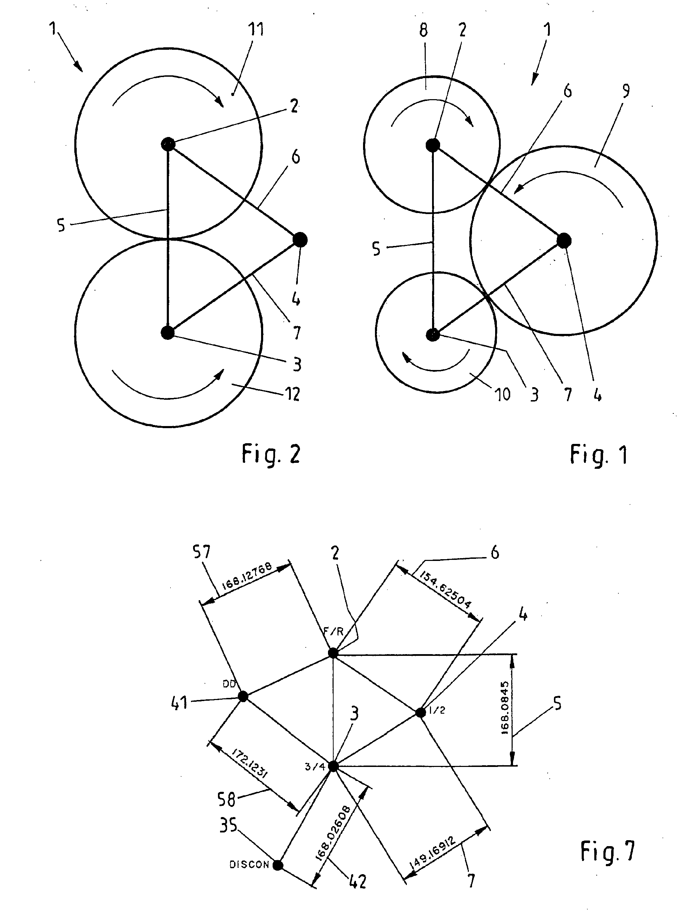

Fig. 1 zeigt die prinzipielle Anordnung der Wellen eines Getriebes 1. Eine Eingangswelle 2, eine Ausgangswelle 3 und eine Zwischenwelle 4 sind in festen Abständen parallel zueinander angeordnet. Der Abstand 5 zwischen der Eingangswelle 2 und der Ausgangswelle 3, der Abstand 6 zwischen der Eingangswelle 2 und der Zwischenwelle 4 und der Abstand 7 zwischen der Zwischenwelle 4 und der Ausgangswelle 8 sind von derselben Größenordnung, aber doch leicht unterschiedlich. Bei dem Gang, der gemäß Fig. 1 eingelegt sein soll, greift ein drehfest mit der Eingangswelle verbundenes Zahnrad 8 in ein Zahnrad 9 auf der Zwischenwelle 4 ein und treibt dieses an. Das Zahnrad 9 greift wiederum in ein drehfest auf der Ausgangswelle 3 angeordnetes Zahnrad 10 ein und treibt dieses an. Hierbei ergeben sich die in Fig. 1 durch Drehpfeile angedeuteten Drehrichtungen. Bei einer Drehung der Eingangswelle 2 im Uhrzeigersinn dreht sich das Zahnrad 9 auf der Zwischenwelle 4 gegen den Uhrzeigersinn und die Ausgangswelle 3 wieder im Uhrzeigersinn.

Fig. 2 zeigt dieselbe Anordnung der Wellen 2 bis 4 wie Fig. 1, wobei aber ein anderer Gang zwischen der Eingangswelle 2 und der Ausgangswelle 3 eingelegt sein soll. Hierbei greift ein drehfest mit der Ausgangswelle 2 verbundenes Zahnrad 11 in ein drehfest auf der Ausgangswelle 3 angeordnetes Zahnrad 12 ein und treibt dieses an. So wird die Ausgangswelle 34 direkt von der Eingangswelle 2 angetrieben, und wenn die Eingangswelle 11 dieselbe Drehrichtung wie in Fig. 1 aufweist, d. h. im Uhrzeigersinn, dreht sich die Ausgangswelle 3 entgegen dem Uhrzeigersinn.

So ist bei derselben Anordnung der Wellen in den Fig. 1 und 2 einmal ein Vorwärtsgang und einmal ein Rückwärtsgang realisiert, wobei die Zuordnung des Vorwärtsgangs bzw. des Rückwärtsgangs zu einer der Figuren 1 und 2 im Prinzip beliebig ist. Bei dem Gang, der gemäß Fig. 2 realisiert ist, ist ein Zahnrad auf der Zwischenwelle 4 nicht beteiligt.

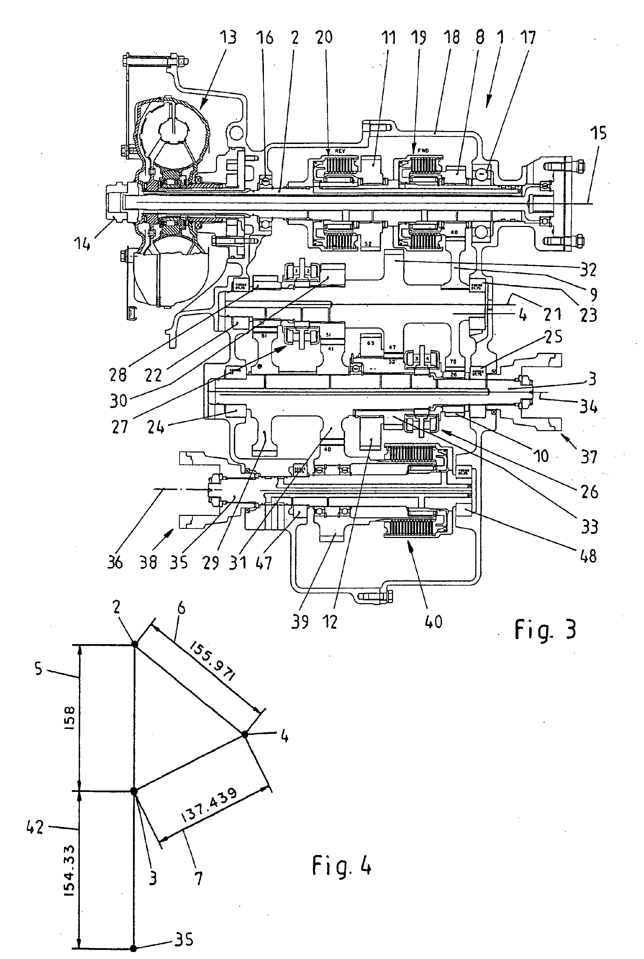

Fig. 3 skizziert eine erste Ausführungsform eines vollständigen Getriebes 1, bei dem das in den Figuren 1 und 2 skizzierte Prinzip umgesetzt ist. Der Eingangswelle 2 des Getriebes 1 ist eingangsseitig ein Drehmomentwandler 13 vorgeschaltet, der eine Wandlereingangswelle 14 aufweist, welche um dieselbe Achse 15 wie die Eingangswelle 2 umläuft. Der Drehmomentwandler 13 ist von herkömmlichem Aufbau und wird hier nicht näher beschrieben werden. Die Eingangswelle 2 ist in zwei Drehlagern 16 und 17 an einem Gehäuse 18 des Getriebes 1 gelagert. Auf der Eingangswelle 1 sind die Zahnräder 8 und 11 angeordnet, wobei die Zahnräder 8 und 11 jeweils über eine Schaltkupplung 19 bzw. 20 drehfest mit der Eingangswelle 2 verbindbar sind. Es versteht sich, daß immer nur eine der beiden Schaltkupplungen 19 oder 20 eingekuppelt sein kann. Bei den Schaltkupplungen 19 und 20 handelt es sich hier um nasse Kupplungen. Das Zahnrad 8 greift in das Zahnrad 9 auf der Zwischenwelle 4 ein, welche um eine Achse 21 umläuft und in zwei Drehlager 22 und 23 an dem Gehäuse 18 gelagert ist. Das Gehäuse 9 greift wiederum in das Zahnrad 10 auf der Ausgangswelle 3 ein, die um eine Achse 34 umläuft und in zwei Drehlagern 24 und 25 an dem Gehäuse 18 gelagert ist. Das Zahnrad 10 kann über einen Doppelsynchronisierer 26 mit der Ausgangswelle 3 synchronisiert, d. h. drehfest verbunden werden. Bei eingekuppelter Kupplung 19 wird dann die Ausgangswelle 3 in derselben Drehrichtung wie die Eingangswelle 2 angetrieben. Dies entspricht bei dem Getriebe 1 gemäß Fig. 3 dem vierten Vorwärtsgang. Wenn hingegen die Kupplung 20 eingekuppelt wird, treibt das Zahnrad 11 auf der Eingangswelle 2 das Zahnrad 12 auf der Ausgangswelle 3 an. Dies kann mit dem Doppelsynchronisierer 26 drehfest mit der Ausgangswelle 3 verbunden werden. Auf diese Weise wird bei dem Getriebe 1 gemäß Fig. 3 der dritte Rückwärtsgang realisiert. Die Übertragungswege des Drehmoments bei den weiteren Vorwärtsgängen und Rückwärtsgängen des Getriebes 1 gemäß Fig. 3 sind wie folgt.

### Erster Vorwärtsgang:

Eingangswelle 2, Schaltkupplung 19, Zahnrad 8, Zahnrad 9, Zwischenwelle 4, Doppelsynchronisierer 27, Zahnrad 28, Zahnrad 29 und Ausgangswelle 3.

### Zweiter Vorwärtsgang:

Eingangswelle 2, Schaltkupplung 19, Zahnrad 8, Zahnrad 9, Zwischenwelle 4, Doppelsynchronisierer 27, Zahnrad 30, Zahnrad 31 und Ausgangswelle 3.

### Dritter Vorwärtsgang:

Eingangswelle 2, Schaltkupplung 19, Zahnrad 8, Zahnrad 9, Zwischenwelle 4, Zahnrad 32, Zahnrad 33, Doppelsynchronisierer 26 und Ausgangswelle 3.

### Erster Rückwärtsgang:

Ausgangswelle 2, Schaltkupplung 20, Zahnrad 11, Zahnrad 12, Zahnrad 33, Zahnrad 32, Zwischenwelle 4, Doppelsynchronisierer 27, Zahnrad 28, Zahnrad 29, Ausgangswelle 3. Dabei sind die Zahnräder 12 und 33 nicht mit der Ausgangswelle 4 verbunden, sondern nur miteinander.

### Vierter Rückwärtsgang:

Eingangswelle 2, Schaltkupplung 20, Zahnrad 11, Zahnrad 12, Zahnrad 33, Zahnrad 32, Zwischenwelle 4, Zahnrad 9, Zahnrad 10, Doppelsynchronisierer 26, Ausgangswelle 3. Auch hierbei sind die Zahnräder 12 und 33 nur miteinander und nicht mit der Ausgangswelle 3 drehfest verbunden.

Bezüglich der Aufteilung der Schaltkupplungen 19 und 20 und der Doppelsynchronisierer 26 und 27 ist festzustellen, daß diese gleichmäßig auf die drei Wellen 2, 3 und 4 verteilt sind, wobei ein Doppelsynchronisierer 26 bzw. 27 wie zwei Kupplungen zählt.

Neben der Ausgangswelle 3, die um eine Achse 34 umläuft, weist das Getriebe 1 gemäß Fig. 3 aber auch noch eine Ausgangswelle 35 auf, die um eine hierzu parallele Achse 36 umläuft, wobei ein Anschluß 37 an die Ausgangswelle 3 und ein Anschluß 38 an die Ausgangswelle 35 in entgegengesetzte Richtungen zeigen.

Auf der Ausgangswelle 35 ist ein Zahnrad 39 angeordnet, das in das Zahnrad 31 eingreift, welches drehfest mit der Ausgangswelle 3 verbunden wird. Das Zahnrad 39 kann über eine Schaltkupplung 40 mit der Ausgangswelle 35 drehfest verbunden werden, um die Ausgangswelle 35 zu aktivieren. Die Zahnzahlen der Zahnräder 39 und 31 sind unterschiedlich, so daß unterschiedliche Umdrehungsgeschwindigkeiten der Ausgangswellen 3 und 35 realisiert sind, beispielsweise um einen Allradantrieb bei unterschiedlich großen Vorder- und Hinterrädern eines Back Hoe Loaders zu realisieren.

Bei der Ausgangswelle 35 handelt es sich um eine Zusatzfunktion des Getriebes 1, die mit nur einem weiteren zusätzlichen Zahnrad 39 realisiert ist.

Ansonsten weist das Getriebe 1 insgesamt 11 Zahnräder zur Realisation von vier Vorwärtsgängen und vier Rückwärtsgängen auf, die auf insgesamt drei Wellen 2 bis 3 angeordnet sind. von den Zahnrädern sind die Zahnräder 8 und 11 über die Schaltkupplungen 19 und 20 mit der Eingangswelle 2 drehfest verbindbar. die Zahnräder 9 und 32 sind drehfest mit der Zwischenwelle 4 verbunden, während die Zahnräder 28 und 30 wechselweise über den Doppelsynchronisierer 27 mit der Zwischenwelle 4 verbindbar sind. Die Zahnräder 29 und 31 sind drehfest mit der Ausgangswelle 8 verbunden, während die Zahnräder 12 und 33 als eine Einheit und das Zahnrad 10 als andere Einheit wechselweise über den Doppelsynchronisierer 26 mit der Ausgangswelle 3 verbindbar sind. Die Zahnräder 12 und 33 könnten auch zugunsten eines einzigen Zahnrads zusammengefaßt werden, in das dann einerseits das Zahnrad 11 auf der Eingangswelle und andererseits das Zahnrad 32 auf der Zwischenwelle eingreift. Durch die Aufteilung in die Zahnräder 12 und 33 ist aber eine gewünschte Abstufung der Gänge des Getriebes 1 bei begrenztem Durchmesser der Zahnräder leichter realisierbar.

Fig. 4 zeigt die geometrische Lage der Wellen 2, 3, 4 und 35, wobei deren Abstände 5, 6, 7 und 42 auch betragsmäßig in mm angegeben sind. Die Ausgangswelle 35 liegt noch unterhalb der Ausgangswelle 3, welche sich unterhalb der Eingangswelle 2 befindet. Seitlich versetzt dazu ist die Zwischenwelle 4 angeordnet.

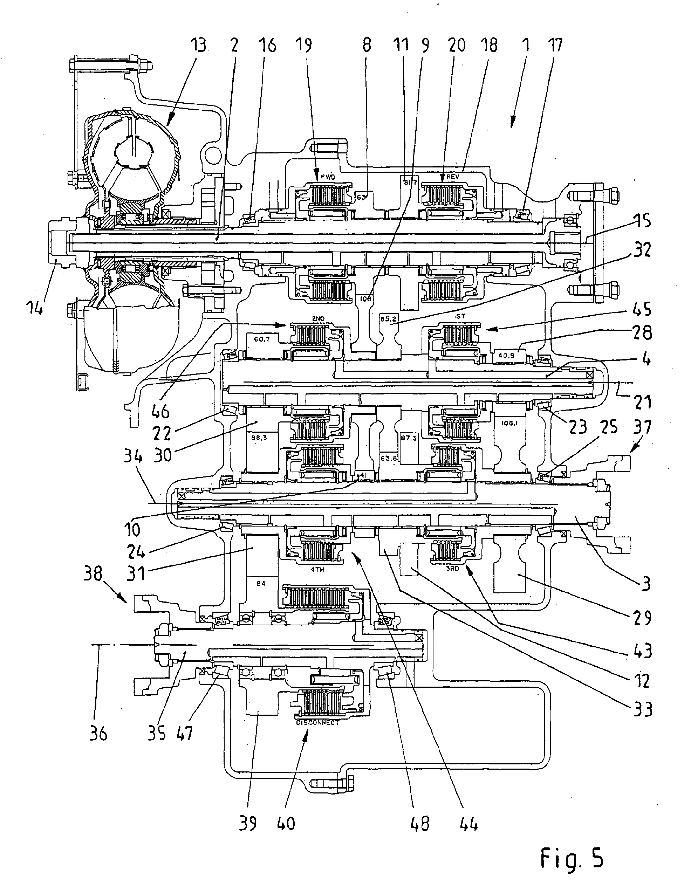

Die in Fig. 5 wiedergegebene Ausführungsform des Getriebes 1 unterscheidet sich von derjenigen gemäß Fig. 4 im wesentlichen dadurch, daß statt der Doppelsynchronisierer 26 und 27 auf der Ausgangswelle 3 und der Zwischenwelle 4 jeweils 2 separate Schaltkupplungen 43 und 44 bzw. auf der Zwischenwelle 4 jeweils zwei separate Schaltkupplungen 45 und 46 angeordnet sind. Daneben gibt es konstruktive Detailunterschiede. So sind beispielsweise die Drehlager 16, 17, 22, 23, 24 und 25 als Kegelrollenlager ausgebildet. An den bei den einzelnen Gängen beteiligten Zahnrädern ändert sich nichts, auch die Verwendung der Schaltkupplungen 19 und 20 entspricht der obigen Beschreibung der Fig. 3. Von den zusätzlichen Schaltkupplungen 43 bis 46 dient die Kupplung 45 zum Einlegen der jeweils ersten Gänge, die Kupplung 46 zum Einlegen der jeweils zweiten Gänge, die Kupplung 43 zum Einlegen der jeweils dritten Gänge und die Kupplung 44 zum Einlegen der jeweils vierten Gänge. Die Kupplungen ersetzen dabei jeweils die Doppelsynchronisierer 26 und 27. Durch die Verwendung der Schaltkupplungen 43 bis 46 wird das Getriebe gemäß Fig. 5 auch als Power-Shift-Getriebe bezeichnet, während es sich bei dem Getriebe gemäß Fig. 3 um eine Power-Shuttle-Version handelt.

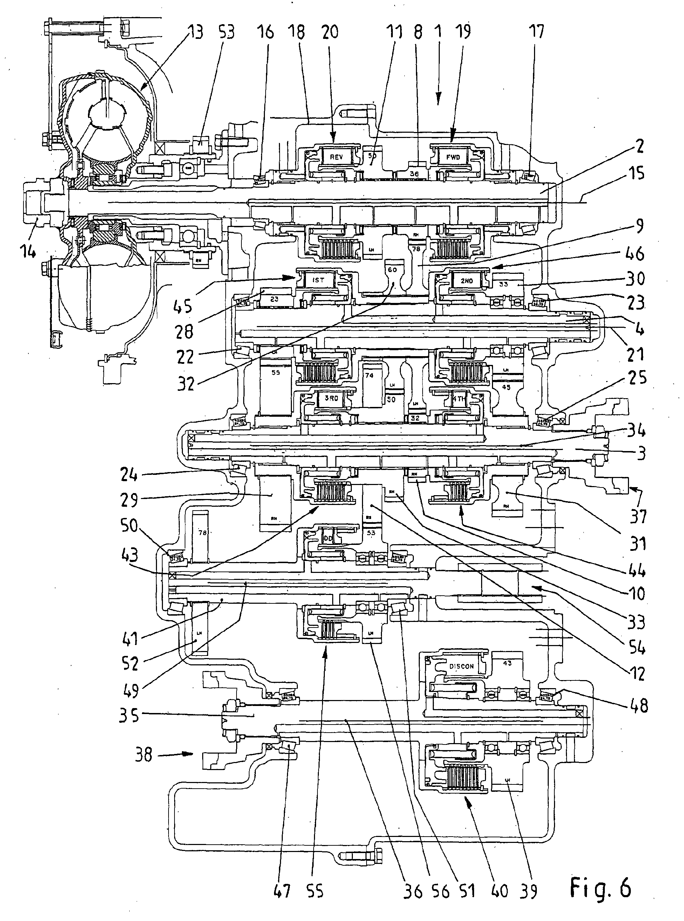

Die weitere Ausführungsform des neuen Getriebes gemäß Fig. 6 ist wieder ein Power Shift-Getriebe. Es ist aber problemlos auch eine entsprechende Power-Shuttle-Version mit Doppelsynchronisierern ausbildbar. Das Besondere der Ausführungsform des Getriebes gemäß Fig. 6 ist eine zusätzliche Zwischenwelle 41, die um eine Achse 49 in Drehlagern 50 und 51 gegenüber dem Gehäuse 18 drehbar gelagert ist. Auf der Welle 41 ist drehfest ein Zahnrad 52 angeordnet, das in ein Zahnrad 53 eingreift und von diesem angetrieben wird, welches drehfest mit der Wandlereingangswelle 14 verbunden ist und mit dieser um die Achse 15 umläuft. An der Welle 41 ist einmal ein Anschluß 54 für einen externen Drehmomentabgriff ausgebildet. Über eine Schaltkupplung 55 ist aber weiterhin ein auf der Welle 41 angeordnetes Zahnrad 56 drehfest mit dieser verbindbar, welches in das Zahnrad 12 auf der Ausgangswelle 3 eingreift. Auf diese Weise werden vier zusätzliche Vorwärtsgänge realisiert, die dadurch eingelegt werden, daß statt der Schaltkupplung 19 die Schaltkupplung 55 eingekuppelt wird, zusammen mit einer der Schaltkupplungen 43 bis 46, wobei die Drehmomentübertragungen ab dem Zahnrad 12 denjenigen bei den Rückwärtsgängen entsprechen, nur daß die Zahnräder durch die Zwischenschaltung der zusätzlichen Zwischenwelle 40 die umgekehrte Drehrichtung aufweisen. Günstig ist eine Auslegung des Getriebes 1 gemäß Fig. 6 so, daß die vier Rückwärtsgänge eine um etwa 20 % schnellere Übersetzung aufweisen als die vier Vorwärtsgänge, die über die Schaltkupplung 19 eingelegt werden, und daß über die Schaltkupplung 55 vier zusätzliche Over- oder Direktdrivevorwärtsgänge für die Schnellfahrt in Vorwärtsrichtung einlegbar sind.

Fig. 7 skizziert die Lage der Wellen 2, 3, 4, 35 und 40, und gibt dabei auch die Abstände 5 bis 7 und 42 sowie weitere Abstände 57 und 58 zwischen der zusätzlichen Zwischenwelle 40 und der Eingangswelle 2 einerseits sowie der Ausgangswelle 3 andererseits an. Die Eingangswelle 2 liegt oberhalb der Ausgangswelle 3, noch darunter liegt die weitere Ausgangswelle 35. Seitlich hiervon befindet sich einerseits die Zwischenwelle 4 und andererseits die weitere Zwischenwelle 14.

### BEZUGSZEICHENLISTE

- 1 -: Getriebe
- 2 -: Eingangswelle
- 3 -: Ausgangswelle
- 4 -: Zwischenwelle
- 5 -: Abstand
- 6 -: Abstand
- 7 -: Abstand
- 8 -: Zahnrad
- 9 -: Zahnrad
- 10 -: Zahnrad

- 11 -: Zahnrad
- 12 -: Zahnrad
- 13 -: Drehmomentwandler
- 14 -: Wandlereingangswelle
- 15 -: Achse
- 16 -: Drehlager
- 17 -: Drehlager
- 18 -: Gehäuse
- 19 -: Schaltkupplung
- 20 -: Schaltkupplung

- 21 -: Achse
- 22 -: Drehlager
- 23 -: Drehlager
- 24 -: Drehlager
- 25 -: Drehlager
- 26 -: Doppelsynchronisierer
- 27 -: Doppelsynchronisierer
- 28 -: Zahnrad
- 29 -: Zahnrad
- 30 -: Zahnrad

- 31 -: Zahnrad
- 32 -: Zahnrad
- 33 -: Zahnrad
- 34 -: Achse
- 35 -: Ausgangswelle
- 36 -: Achse
- 37 -: Anschluß
- 38 -: Anschluß
- 39 -: Zahnrad
- 40 -: Kupplung

- 41 -: Zwischenwelle
- 42 -: Abstand
- 43 -: Schaltkupplung
- 44 -: Schaltkupplung
- 45 -: Schaltkupplung
- 46 -: Schaltkupplung
- 47 -: Drehlager
- 48 -: Drehlager
- 49 -: Achse
- 50 -: Drehlager

- 51 -: Drehlager
- 52 -: Zahnrad
- 53 -: Zahnrad
- 54 -: Anschluß
- 55 -: Schaltkupplung
- 56 -: Zahnrad
- 57 -: Abstand
- 58 -: Abstand
59 -
60 -

## Patentansprüche

1. Getriebe, insbesondere für ein Kraftfahrzeug, mit einer Eingangswelle, mit einer Ausgangswelle und mit einer Zwischenwelle, wobei die drei Wellen in festen Abständen parallel zueinander ausgerichtet sind und wobei Zahnräder auf den drei Wellen gelagert sind, die paarweise ineinander eingreifen und in unterschiedlichen Kombinationen mindestens vier Vorwärtsgängen und vier Rückwärtsgängen zugeordnet sind, wobei die Ausgangswelle in den Rückwärtsgängen bei fester Drehrichtung der Eingangswelle die umgekehrte Drehrichtung aufweist wie in den Vorwärtsgängen, **dadurch gekennzeichnet, daß** die Eingangswelle (2), die Ausgangswelle (3) und die Zwischenwelle (4) so in den Ecken eines gedachten Dreiecks angeordnet sind, daß in mindestens einem der Gänge ein Zahnrad (11) auf der Eingangswelle (2), das mit dieser umläuft, in ein Zahnrad (12) auf der Ausgangswelle (3), das mit dieser umläuft, eingreift, und in mindestens einem anderen der Gänge ein Zahnrad (8) auf der Eingangswelle (2), das mit dieser umläuft, in ein Zahnrad (9) auf der Zwischenwelle (4) eingreift, das seinerseits in ein Zahnrad (10) auf der Ausgangswelle (3) eingreift, das mit dieser umläuft.

2. Getriebe nach Anspruch 1, **dadurch gekennzeichnet, daß** der eine und der andere der Gänge vom Betrag her unterschiedliche Übersetzungen zwischen der Eingangswelle (2) und der Ausgangswelle (3) aufweisen.

3. Getriebe nach Anspruch 1 oder 2, **dadurch gekennzeichnet, daß** die Abstände der Wellen (2-4) untereinander nicht alle gleich sind.

4. Getriebe nach einem der Ansprüche 1 bis 3, **dadurch gekennzeichnet, daß** in mindestens einem weiteren der Gänge ein Zahnrad auf der Eingangswelle, das mit dieser umläuft, in ein Zahnrad auf der Ausgangswelle eingreift, das seinerseits in ein Zahnrad auf der Zwischenwelle eingreift, wobei das Zahnrad auf der Zwischenwelle mit einem weiteren Zahnrad auf der Zwischenwelle drehfest verbunden ist, das in ein Zahnrad auf der Ausgangswelle eingreift, das mit dieser umläuft.

5. Getriebe nach einem der Ansprüche 1 bis 4, **dadurch gekennzeichnet, daß** in mindestens einem weiteren der Gänge ein Zahnrad (11) auf der Eingangswelle (2), das mit dieser umläuft, in ein Zahnrad (12) auf der Ausgangswelle (3) eingreift, wobei das Zahnrad (12) auf der Ausgangswelle (3) mit einem weiteren Zahnrad (33) auf der Ausgangswelle (3) drehfest verbunden ist, das in ein Zahnrad (32) auf der Zwischenwelle (4) eingreift, wobei das Zahnrad (32) auf der Zwischenwelle mit einem weiteren Zahnrad (30) auf der Zwischenwelle (4) drehfest verbunden ist, das in ein Zahnrad (31) auf der Ausgangswelle (3) eingreift, das mit dieser umläuft.

6. Getriebe nach einem der Ansprüche 1 bis 5, **dadurch gekennzeichnet, daß** zwei Schaltkupplungen (19 und 20) zum Einlegen der Vorwärtsgänge einerseits und zum Einlegen der Rückwärtsgänge andererseits jeweils zwischen der Eingangswelle (2) und einem darauf gelagerten Zahnrad (8 bzw. 11) vorgesehen sind.

7. Getriebe nach einem der Ansprüche 1 bis 6, **dadurch gekennzeichnet, daß** zwei Schaltkupplungen (43, 44) zum Einlegen zweier Gänge jeweils zwischen der Ausgangswelle (3) und einem darauf gelagerten Zahnrad (10 bzw. 12/33) vorgesehen sind.

8. Getriebe nach einem der Ansprüche 1 bis 7, **dadurch gekennzeichnet, daß** zwei Schaltkupplungen (45, 46) zum Einlegen zweier Gänge jeweils zwischen der Zwischenwelle (4) und einem darauf gelagerten Zahnrad (28 bzw. 30) vorgesehen sind.

9. Getriebe nach einem der Ansprüche 1 bis 6, **dadurch gekennzeichnet, daß** ein Doppelsynchronisierer (26) zum Einlegen zweier aufeinander folgender Gänge jeweils zwischen der Ausgangswelle (3) und einem darauf gelagerten Zahnrad (10 bzw. 12/33) vorgesehen sind.

10. Getriebe nach einem der Ansprüche 1 bis 7, **dadurch gekennzeichnet, daß** ein Doppelsynchronisierer (27) zum Einlegen zweier aufeinander folgender Gänge jeweils zwischen der Zwischenwelle (4) und einem darauf gelagerten Zahnrad (28 bzw. 30) vorgesehen sind.

11. Getriebe nach Anspruch 4, **dadurch gekennzeichnet, daß** für die vier Vorwärtsgänge und die vier Rückwärtsgänge insgesamt 10 Zahnräder vorgesehen sind, die ausschließlich auf den drei Wellen (2-4) angeordnet sind.

12. Getriebe nach Anspruch 5, **dadurch gekennzeichnet, daß** für die vier Vorwärtsgänge und die vier Rückwärtsgänge insgesamt 11 Zahnräder (8-12, 28-33) vorgesehen sind, die ausschließlich auf den drei Wellen (2-4) angeordnet sind.

13. Getriebe nach einem der Ansprüche 1 bis 12, **dadurch gekennzeichnet, daß** eine weitere Ausgangswelle (35) vorgesehen ist, auf der ein Zahnrad (39) gelagert ist, wobei dieses Zahnrad (39) in ein drehfest auf der anderen Ausgangswelle (3) gelagertes und gleichzeitig mindestens einem Gang des Getriebes (1) zwischen der Eingangswelle (2) und der anderen Ausgangswelle (3) zugeordnetes Zahnrad (31) eingreift und über eine Kupplung (40) mit der weiteren Ausgangswelle (35) verbindbar ist.

14. Getriebe nach einem der Ansprüche 1 bis 13, **dadurch gekennzeichnet, daß** die vier Vorwärtsgänge und die vier Rückwärtsgänge vom Betrag her gleiche Übersetzungen zwischen der Eingangswelle und der Ausgangswelle aufweisen.

15. Getriebe nach einem der Ansprüche 1 bis 13, **dadurch gekennzeichnet, daß** die vier Rückwärtsgänge vom Betrag her eine um 15 bis 25 % schnellere Übersetzungen zwischen der Eingangswelle (2) und der Ausgangswelle (3) aufweisen als die vier Vorwärtsgänge.

16. Getriebe nach einem der Ansprüche 1 bis 15, **dadurch gekennzeichnet, daß** der Eingangswelle (2) ein Drehmomentwandler (13) mit einer Wandlereingangswelle (14) vorgeschaltet ist.

17. Getriebe nach Anspruch 16, **dadurch gekennzeichnet, daß** eine weitere Zwischenwelle (41) vorgesehen ist, auf der ein Zahnrad (52), das in ein drehfest auf der Wandlereingangswelle (14) angeordnetes Zahnrad (53) eingreift, und ein weiteres Zahnrad (56) angeordnet sind, das in ein Zahnrad (12) auf der Ausgangswelle (3) eingreift, wobei zwischen den beiden Zahnrädern (52, 56) auf der weiteren Zwischenwelle (41) eine Kupplung (55) vorgesehen ist.

18. Getriebe nach den Anspruch 17, **dadurch gekennzeichnet, daß** die Eingangswelle (2) oberhalb der Ausgangswelle (3) vorgesehen ist, wobei auf halber Höhe einerseits die eine Zwischenwelle (4) und andererseits die weitere Zwischenwelle (41) vorgesehen sind.
